# EUROPEAN PATENT APPLICATION

(11) **EP 2 332 713 A1**
(43) Date of publication of application: **15.06.2011**
(21) Application number: 09178561.8
(22) Date of filing: 09.12.2009
(51) Int. Cl.: B29C 45/33, B29C 45/26

(54) **Multi cavity mould for injection moulding elbow fittings**

(71) Applicant: Tool-Tech Holding B.V., 7800 AG Emmen (NL)
(72) Inventor: van Manen, Hendrik Johan, 7822 EH Emmen (NL); Albers, Hendrikus Johannes Theodorus, 7751 GM Dalen (NL)
(74) Representative: Hatzmann, Martin

(57) **Abstract**

A mould for injection moulding bounds a plurality of cavities (12, 13) each shaped for moulding elbow fittings. At least a portion of a curved tube section forming portion (55) is shaped for forming a back draught relative to a surface portion (62) of the first sleeve (3) and to a surface portion (63) of the second sleeve (4). Slides (70, 71) are mounted to the second mould half (10) which has guides (72, 73) for guiding movement of the slides (70, 71) in directions (74, 75) obliquely to the opening and closing directions (11) of the mould (2). The slides (70, 71) move apart when the mould (2) is opened and move towards each other when the mould (2) is closed. The slides (70, 71) are located and shaped for forming at least the back draught elbow fitting surface portions (61).

## Description

### FIELD AND BACKGROUND OF THE INVENTION

The invention relates to a mould for injection moulding elbow fittings each having a first sleeve for receiving a first tube end, a second sleeve for receiving a second tube end and a curved tube section integrally connecting the second sleeve to the first sleeve, such that a centre line of the second sleeve is oriented at an angle relative to a continuation of a central axis of the first sleeve, said angle being larger than 0°.

Such elbow fittings are manufactured in large numbers, mostly of Polyvinylchloride or Polypropylene, and are used for connecting tube sections, such as wastewater tubing and water drainage tubing to each other, at a mutual angle. The angle between the first and second sleeve in usually expressed as the angle over which a tube connected to the second sleeve is deflected relative to a continuation of the centre line of a tube connected to the first sleeve. This angle also constitutes the angle over which the second sleeve is deflected relative to the first sleeve.

Although such elbow fittings are fairly simple, highly standardized products, for which low manufacturing costs are very important, moulds in which such elbow fittings are moulded are generally very expensive, large, multi cavity moulds, which allow mass production at a very high production rate. Moreover, in larger moulds of this type, the runners are in many cases heated to ensure that the plastic material is still mouldable as it is injected into the moulding cavities. Such heated runners further add to the manufacturing and operational costs of the mould.

### SUMMARY OF THE INVENTION

It is an object of the present invention to provide a mould that allows to mould elbow fittings of the above described type in large numbers at a very high production rate, but which can be manufactured at lower costs than a conventional mould for injection moulding the same type of elbow fittings.

According to the invention, this object is achieved by providing a mould according to claim 1. Because the cavities are arranged in pairs and oriented such that first sleeve forming portions are oriented in the opening and closing direction with outer ends of the first sleeve forming portions facing away from the first mould half and second sleeve forming portions are oriented obliquely away from each other and from the second mould half, the cavities can be arranged in a much more compact arrangement. In turn, this allows a mould having a given number of cavities to be much smaller than a conventional mould having a comparable production capacity. Furthermore, the more compact arrangement of the cavities allows the length of the runners to be substantially reduced.

To avoid that back draught surface portions of the curved tube portions prevent damage free removal of the moulded elbow fittings, the slides are movable relatively to the second mould half along trajectories oriented obliquely to the opening and closing direction of the mould in a plane transverse to a plane defined by centre lines of the cavities of that pair, such that the slides move apart when the mould is opened and move towards each other when the mould is closed. Cavity bounding surface portions of the slides bound at least the back draught surface portions when the mould is in closed condition.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a top view in cross-section of an example of a mould according to the invention;
Fig. 2 is a view along the line II-II of a second mould half of the mould shown in Fig. 1;
Fig. 3 is a cross-sectional view of an example of an elbow fitting made in the mould shown in Figs. 1 and 2; and
Fig. 4 is a side view of the elbow fitting shown in Fig 3.

### DETAILED DESCRIPTION

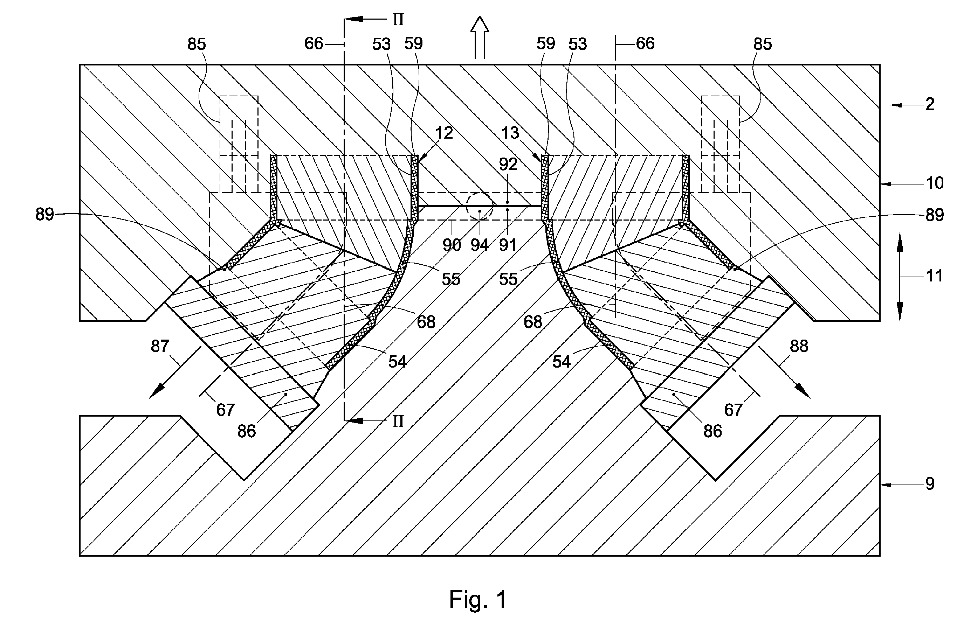

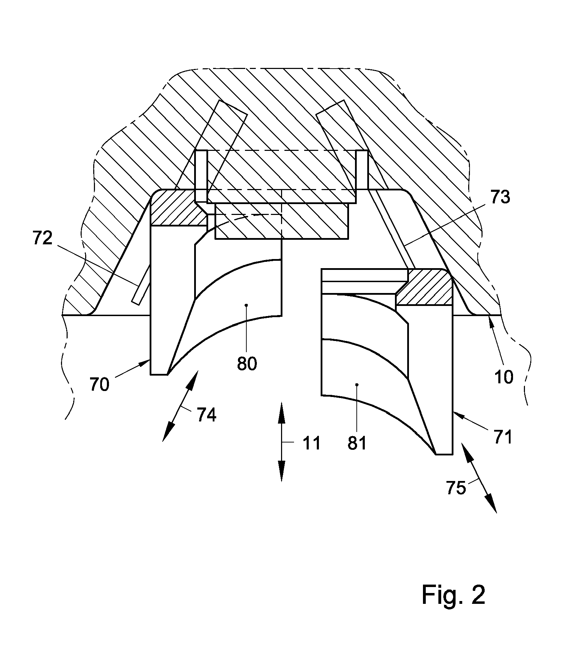

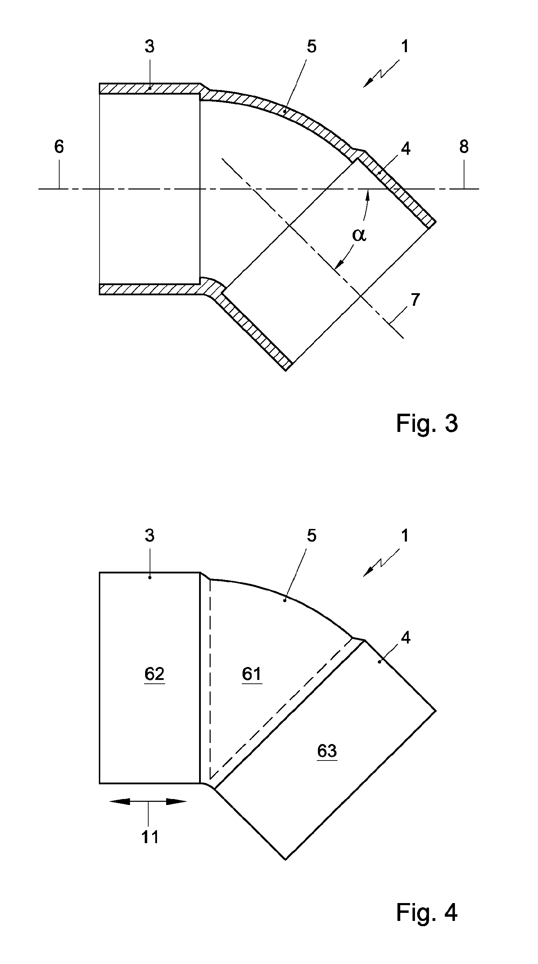

In Fig. 3, an example of a fitting 1 is shown that can be moulded using a mould 2 as shown in Figs. 1 and 2. According to the present example, the fitting is an elbow fitting 1. Such elbow fittings 1 are mass produced products for which even a small reduction in manufacturing costs can be of great importance, in view of the large numbers in which such products are used and the fierce price competition in the market for such standardized products.

The elbow fittings 1 for the manufacture of which moulds according to the invention can be used have a first sleeve 3 for receiving a first tube end, a second sleeve 4 for receiving a second tube end and a curved tube section 5 integrally connecting the second sleeve 4 to the first sleeve 3. A centre line 7 of the second sleeve 4 is oriented at an angle α relative to a continuation 8 of a central axis 6 of the first sleeve 4. In the present example, the angle α is 45°. However, a mould according to the invention can be advantageous when shaped for moulding any fitting in which the angle α between two of its sleeves is larger than 0°. A problem of moulding such elbow fittings is that multicavity moulds for injection moulding such products tend to be very large and accordingly costly. The large size usually also entails relatively long runners.

The mould shown in Figs. 1 and 2 has a first mould half 9 and a second mould half 10. The mould halves 9, 10 are arranged to be mountable to clamping plates of an injection moulding apparatus comprising an extruder and a mould clamp. In mounted condition, the second mould half 10 is movable in opening and closing directions 11 relative to the first mould half 9 between an open position spaced from the first mould half 9 and a closed position (as shown in Fig. 1) in abutment with the first mould half 9. The mould with the second mould half 10 in the closed position bounds a plurality of cavities 12; 13. The cavities 12, 13 constitute at least one cavity pair of which each cavity has:
- a first sleeve forming portion 53 oriented in the opening and closing directions 11,
- a second sleeve forming portion 54 oriented obliquely away from the other cavity 12, 13 of that pair and from the second mould half 10, and
- a curved tube section forming portion 55.

An outer end 59 of each first sleeve forming portion 53 faces away from the first mould half 9. A portion of each curved tube section forming portion 55 is shaped for forming a surface 61 constituting a back draught relative to a surface portion 62 of the associated first sleeve 3 and relative to a surface portion 63 of the associated second sleeve 4.

A centre line 67 of each second sleeve forming portion 54 is oriented at an angle α relative to a continuation 68 of a central axis 66 of the first sleeve forming portion 53. A mould according to the invention is particularly advantageous if the angle α is larger than 0°. In practice, the angle α will generally be larger than 10° and smaller than 90°.

The second mould half 10 has slides 70, 71 and guide tracks 72, 73 for guiding movement of the slides 70, 71 relative to the second mould half 10, in directions 74, 75 obliquely to the opening and closing directions 11 of the mould 2 in a plane transverse to a plane defined by centre lines 66, 67 of the cavities 12, 13 of the respective pair of cavities. Cavity bounding surface portions 80, 81 of the slides 70, 71 are shaped to form the back draught surface portions 61 of the elbow fitting 1 when the mould 2 is in closed condition.

After elbow fittings 1 have been injection-moulded in the cavities 12, 13, the mould 2 is opened in the opening direction 11. Since the outer circumferential surface 61 of the curved tube portion 5 of the elbow fittings 1 is partially recessed relative to the outer circumferential surfaces 62, 63 of the first and second sleeves, 3, 4 in a direction perpendicular to the opening direction 11, the outer circumferential surface 61 of the curved tube portion 5 partially constitute a back draught that would prevent the mould halves 9, 10 from moving apart in the opening direction and/or removing the elbow fitting 1 from the mould 2 if no special measures are taken. However, in the present mould 2, the back draught portions of the outer circumferential surface 61 of the curved tube portion 5 of the elbow fittings 1 are formed (moulded against) surface portions 80, 81 of the slides 70, 71. As the mould 2 is opened, the slides 71, 72 initially move obliquely apart and away from the second mould half 10 while the second mould half 10 moves away from the first mould half 9. Thus, the slides 70, 71 initially move perpendicularly to the opening direction 11 only and do not move away from the first mould half 9. Subsequently, well after having cleared the back draught, the slides 70, 71 move in the opening direction 11 together with the second mould half 10.

Thus, a simple solution is provided for clearing the back draught of the moulded elbow fitting 1. The movement of the slides 70, 71 relative to the second mould half 10 is driven by the movement of the second mould half 10 relative to the first mould half 9, so no separate drive is needed. Because of the absence of separate drive means and the oblique outward orientation of the path of movement of the slides 70, 71 relative to the opening direction 11 of the second mould half 10, the slides 70, 71 occupy very little room to the side of the associated cavities 12, 13. Accordingly, the slides 70, 71 allow the cavities 12, 13 to be located close to each other, which is favourable for keeping the mould size transverse to the opening direction small and for keeping the runners short. The pitch at which successive cavities can be located is relatively small, because the cavities 12, 13 are generally oriented in opening direction 11 and with the smallest dimensions oriented perpendicular to the opening direction 11. A small pitch between successive cavities is also favourable for keeping the runners short.

Although the slides 70, 71 may move apart during opening of the mould due to engagement with back draught surfaces of the moulded elbow fitting 1, it is preferred that spring members 85 are provided that engage the slides 70, 71 and urge the slides 70, 71 away from the second mould half 10. It is thus ensured that the slides reliably clear the back draught and are not dragged along the moulded elbow fitting, which is still relatively soft at the time of opening the mould 2, during opening. Furthermore, it is avoided that contact forces between the slides 70, 71 and the moulded product during forces result in high large forces exerted on the guide tracks 72, 73 or even blocking of movement of the slides 70, 71 along the guide tracks 72, 73.

The first mould half 9 is equipped with core members 86 movable along the first mould half 9 along trajectories parallel to the respective centre lines 67 of the second sleeve forming portions 54. The core members 86 are shaped to form the inner surfaces of the second sleeve and of a portion of the curved tube section, which inner surfaces include portions that are back draught relative to the opening direction 11 of the mould, but not relative to the directions 87, 88 in which the core members 86 can be retracted during or after opening of the mould 2.

The core members 86 each have a shoulder portion 89 constituting an end face of the second sleeve forming portion 54 of the cavity 12, 13 when the mould 2 is in closed condition. Thus, the end faces of the second sleeves 4, which are back draught relative to the opening direction 11 of the mould, do not constitute an obstruction for the second mould half 10 when the second mould half 10 is to be moved away from the first mould half 9 in the opening direction 11.

The mould has a runner 90 in mutually facing mould half faces 91, 92. The runner 90 extends between the pair of cavities 12, 13. Since the entry openings of the cavities are very close together, the runner 90 is very short.

Preferably, a row of at least two pairs of cavities is provided. The row is preferably oriented in a direction transverse (and more preferably perpendicular) to the plane defined by the centre lines 66, 67 of the cavities 12, 13 of at least one of said pairs of cavities. For feeding plastic material to be injected to the pairs of cavities, a main runner 94 in the mutually facing mould half faces 91, 92, extends parallel to the row of cavity pairs between the cavities of the successive pairs. Because of the small pitch between successive pairs of cavities, the length of the main runner 94 can be kept small, which in turn allows to leave out means for heating the runner, even for injection moulding heat sensitive plastics such as PVC.

Within the framework of the invention as set forth in the claims, many other embodiments than the embodiments described and contemplated above are conceivable. For instance, the mould cavity may be shaped for moulding a fitting include one or more other sleeves for receiving one or more other tube ends.

## Claims

1. A mould for injection moulding having a first mould half (9) and a second mould half (10) movable in opening and closing directions (11) relative to the first mould half (9) between an open position spaced from the first mould half (9) and a closed position in abutment with the first mould half (9);
wherein the mould (2) with the second mould half (10) in the closed position bounds a plurality of cavities (12, 13);
wherein each of said cavities (12, 13) is shaped for moulding elbow fittings (1) having a first sleeve (3) for receiving a first tube end, a second sleeve (4) for receiving a second tube end and a curved tube section (5) integrally connecting the second sleeve to the first sleeve;
wherein said cavities (12, 13) constitute at least one cavity pair, the cavities (12, 13) of said pair each having:
a first sleeve forming portion (53) oriented in the opening and closing directions (11) with an outer end (59) of the first sleeve forming portion (53) facing away from the first mould half (9),
a second sleeve forming portion (54) oriented obliquely away from the other cavity (12, 13) of said pair and from the second mould half (10), and
a curved tube section forming portion (55) of which at least a portion is shaped for forming an elbow fitting surface (61) constituting a back draught relative to a surface portion (62) of the first sleeve (3) and to a surface portion (63) of the second sleeve (4);
wherein a centre line (67) of the second sleeve forming portion (54) is oriented at an angle (α) relative to a continuation (68) of a central axis (66) of the first sleeve forming portion (53), said angle (α) being larger than 0°;
wherein slides (70, 71) are mounted to the second mould half (10) which has guides (72, 73) for guiding movement of the slides (70, 71) relative to the second mould half (10) in directions (74, 75) obliquely to the opening and closing directions (11) of the mould (2) in a plane transverse to a plane defined by centre lines (66, 67) of the cavities (12, 13) of said pair, such that the slides (70, 71) move apart when the mould (2) is opened and move towards each other when the mould (2) is closed; and
wherein cavity bounding surface portions (80, 81) of the slides (70, 71) are located and shaped for forming at least said back draught elbow fitting surface portions (61) when said mould (2) is in closed condition.

2. A mould according to claim 1, further comprising spring members (85, 86) engaging the slides (70, 71) and urging the slides (70, 71) away from the second mould half (10).

3. A mould according to claim 1 or 2, further comprising core members (86) movable along the first mould half (9) along trajectories parallel to the respective centre lines (67) of the second sleeve forming portions (54).

4. A mould according to claim 3, wherein the core members (86) have shoulder portions (89) constituting end faces of the second sleeve forming portions (54) of the cavity (12, 13) when the mould (2) is in closed condition.

5. A mould according to any one of the preceding claims, wherein the angle between the central axis of the second sleeve forming portion (54) and the continuation of the central axis of the first sleeve forming portion (53) is larger than 10°

6. A mould according to any one of the preceding claims, wherein the angle between the central axis of the second sleeve forming portion (54) and the continuation of the central axis of the first sleeve forming portion (53) is smaller than 90°.
